**Europäisches Patentamt**

**European Patent Office**

**Office européen des brevets**

(19)

(11) Veröffentlichungsnummer: **0 280 180 B1**

## (12) EUROPÄISCHE PATENTSCHRIFT

(45) Veröffentlichungstag der Patentschrift:
**10.04.91 Patentblatt 91/15**

(51) Int. Cl.$^5$: **F16L 37/12**

(21) Anmeldenummer: **88102318.8**

(22) Anmeldetag: **18.02.88**

(54) **Lösbare Steckverbindung für Rohrleitungen.**

(30) Priorität: **21.02.87 DE 3705610**

(43) Veröffentlichungstag der Anmeldung:
**31.08.88 Patentblatt 88/35**

(45) Bekanntmachung des Hinweises auf die
Patenterteilung:
**10.04.91 Patentblatt 91/15**

(84) Benannte Vertragsstaaten:
**AT BE CH DE ES FR GB GR IT LI LU NL SE**

(56) Entgegenhaltungen:
**DE-A- 2 025 474**
**FR-A- 2 524 114**
**US-A- 2 516 907**
**US-A- 3 241 864**
**US-A- 3 873 062**

(73) Patentinhaber: **Vorschepoth, Heinrich**
**Mielenforster Heide 13**
**W-5000 Köln 80 (DE)**

(72) Erfinder: **Bowers, Rex**
**51, Nuneaton Road**
**Bulkington (GB)**
Erfinder: **Vorschepoth, Heinrich**
**Mielenforster Heide 13**
**W-5000 Köln 80 (DE)**

(74) Vertreter: **Langmaack, Jürgen, Dipl.-Ing. et al**
**Patentanwälte Maxton . Maxton . Langmaack**
**Goltsteinstrasse 93,VII Postfach 51 08 06**
**W-5000 Köln 51 (DE)**

EP 0 280 180 B1

## Beschreibung

Die Erfindung betrifft eine Kupplungsmuffe zum Verbinden der Enden freier Leitungen für strömende Medien, insbesondere für Kraftstoffleitungen an Verbrennungsmotoren, mit einem Muffenteil, das wenigstens eine mit einem elastischen Dichtungselement versehene Einschuböffnung zur Aufnahme eines mit einem Haltebund versehenen Leitungsendes aufweist, und mit einem den Haltebund des Leitungsendes hintergreifenden Sperrteil.

Eine Kupplungsmuffe der vorstehend bezeichneten Art ist aus DE-A-33 10 385 (& FR-A-2524114) bekannt. Diese Kupplungsmuffe weist den Nachteil auf, daß das Sperrteil zunächst auf das einzuschiebende Leitungsende so weit aufgeschoben wird, daß es mit dem Haltebund des Leitungsendes formschlüssig verbunden ist. Anschließend wird dann das Leitungsende mit aufgesetztem Sperrteil in das Muffenteil so weit eingeschoben, daß das freie Ende des Sperrteils in einen entsprechenden Haltebund des Muffenteils einrastet. Das freie Ende des Sperrteils ragt hierbei aus dem Muffenteil heraus und ist durch entsprechende Schlitze radial verformbar, so daß zum Lösen der Steckverbindung diese Teile nach innen gedrückt werden und damit ein Herausziehen des Leitungsendes ermöglichen. Der Nachteil der vorbekannten Steckverbindung besteht darin, daß das elastische Dichtungselement, in der Regel wenigstens ein O-Ring, frei in der Einschuböffnung des Muffenteils liegt und erst nach dem Einschieben des Leitungsendes durch die Stirnkante des Sperrteils in der Einschuböffnung gesichert wird. Wird das Leitungsende herausgezogen, so besteht hierbei die Gefahr, daß der O-Ring in der Einschuböffnung abrollt und zusammen mit dem Leitungsende herausgezogen wird, sofern nicht die Einschuböffnung so lang ausgebildet wird, daß der mögliche Rollweg kürzer ist als die Länge der Einschuböffnung. Ferner besteht die Gefahr, daß beim Einschieben des meist aus Metall hergestellten Leitungsendes eine etwa vorhandene scharfe Stirnkante einen der als Dichtungselement vorgesehenen O-Ringe beschädigt und somit eine zuverlässige Abdichtung nicht mehr gewährleistet ist, was insbesondere bei Kraftstoffleitungen an Verbrennungsmotoren zu einer erhöhten Gefährdung führt. Ein weiterer Nachteil besteht darin, daß über das frei zugängliche, verformbare Ende des Sperrteils auch ein unbeabsichtigtes Lösen der Steckverbindung möglich ist.

Der Erfindung liegt die Aufgabe zugrunde, eine Kupplungsmuffe der eingangs bezeichneten Art zu schaffen, in die das Sperrteil integriert ist und somit eine geschlossene Baueinheit gegeben ist und bei der ein unbeabsichtigtes Lösen nicht möglich ist.

Diese Aufgabe wird erfindungsgemäß dadurch gelöst, daß auf der Seite der Einschuböffnung das Muffenteil mit einer koaxial ausgerichteten Führungshülse versehen ist, in der das Sperrteil axial verschiebbar geführt ist und die mit einer Durchtrittsöffnung versehen ist, die durch einen radial nach innen vorspringenden Begrenzungsbund begrenzt ist, daß die Führungshülse mit wenigstens einer gegen das Sperrteil bewegbaren Haltenase versehen ist und daß das Sperrteil im wesentlichen zylindrisch ausgebildet ist, einen Außendurchmesser aufweist, der geringer ist als der Innendurchmesser der Führungshülse sowie mit einem gegen die Innenfläche der Führungshülse gerichteten Haltekragen versehen ist und an seinem der Durchtrittsöffnung der Führungshülse zugekehrten Ende in radialer Richtung verformbar ausgebildet und mit einem umlaufenden, nach innen gerichteten, den Haltebund des eingeschobenen Leitungsendes hintergreifenden Sperrkragen versehen ist, der mit seinem Außenumfang am Begrenzungsbund der Führungshülse anlegbar ist. Diese Ausbildung hat den Vorteil, daß das Sperrteil in die Kupplungsmuffe integriert ist, so daß zum Herstellen der Verbindung lediglich das Leitungsende so weit eingeschoben werden muß, bis der Sperrkragen hinter den Haltebund des Leitungsendes einrastet. Wird auf das Leitungsende in axialer Richtung eine Zugkraft ausgeübt, so kann sich das Sperrteil in der Führungshülse geringfügig so weit verschieben, bis der Außenumfang des Sperrkragens am Begrenzungsbund der Führungshülse zur Anlage kommt. Da das Sperrteil im Bereich des Sperrkragens, sei es durch entsprechende Materialwahl, sei es durch die Anordnung wenigstens eines axial verlaufenden Schlitzes, radial verformbar ist, wird mit der Anlage des Außenumfangs des Sperrkragens am Begrenzungsbund ein radiales Aufweiten erschwert oder bei entsprechender Ausgestaltung dieses Bereiches völlig unterbunden, so daß selbst bei verhältnismäßig großen Axialkräften die Steckverbindung nicht gelöst werden kann. Will man die Steckverbindung lösen, so muß das Leitungsende zusammen mit dem Sperrteil so weit eingeschoben werden, daß sich nach dem Eindrücken der mit der Führungshülse verbundenen Haltenase der Haltekragen des Sperrteils hierauf abstützen kann und zugleich das Sperrteil innerhalb der Führungshülse im Abstand zum Begrenzungsbund gehalten wird und damit der notwendige Freiraum für eine radiale Verformung des Sperrkragens gegeben ist. Erst dann kann unter Überwindung der federnden Haltekraft zwischen Sperrkragen und Haltebund das Leitungsende herausgezogen werden.

In einer bevorzugten Ausgestaltung der Erfindung ist vorgesehen, daß das verformbare Ende des Sperrteils auf seiner Außenseite eine umlaufende Anlagefläche aufweist, die bei einer axialen Verschiebung des Sperrteils gegen die Durchtrittsöffnung der Führungshülse an einer entsprechend geformten Gegenfläche im Bereich des Begrenzungsbundes der Führungshülse zur Anlage kommt. In bevorzugter Ausgestaltung der Erfindung ist hierbei vorgesehen, daß die Anlagefläche des Sperrteils und die Gegenfläche an der Führungshülse gleichlaufend konisch ausgebildet sind. Dies hat den Vorteil, daß bei einer axial auf das Leitungsende wirkenden Zugbelastung auf den Sperrkragen radial nach innen gerichtete Kräfte einwirken, die den Sperrkragen gegen das Leitungsende pressen und somit die Verriegelungskraft erhöhen. So ist selbst nach einem mehrfachen Lösen dieser Steckverbindung und dem dabei möglichen Verschleiß des Sperrkragens eine zuverlässige Sicherung der Steckverbindung gegeben.

In einer anderen Ausgestaltung der Erfindung ist vorgesehen, daß die Anlagefläche des Sperrteils durch eine im wesentlichen zylindrische Fläche mit geringerem Durchmesser als die angrenzenden Bereiche des Sperrteils ausgebildet wird, die bei einer axialen Verschiebung des Sperrteils den Begrenzungsbund der Führungshülse untergreift. Bei dieser Anordnung wird zwischen Begrenzungsbund und Sperrkragen eine formschlüssige Verbindung hergestellt, die ein Aufweiten des Sperrkragens bei einer axialen Zugbelastung durch das Leitungsende unterbindet.

In weiterer Ausgestaltung der Erfindung ist vorgesehen, daß die Haltenase der Führungshülse an einer nach innen eindrückbaren, federnden Zunge angeordnet ist. In zweckmässiger Ausgestaltung ist hierbei ferner vorgesehen, daß die Haltenase durch das freie, gegen die Einschuböffnung des Muffenteils gerichtete Ende der Zunge gebildet wird. Hierdurch ergibt sich eine glatte Innenfläche der Führungshülse auch im Bereich der Zungen, so daß eine freie axiale Verschiebbarkeit des Sperrteils gewährleistet ist. Besonders zweckmässige ist es, wenn zwei diametral gegenüberliegende Zungen vorgesehen werden. Hierdurch ergibt sich eine einfache Handhabung zum Lösen der Steckverbindung.

In einer bevorzugten Ausgestaltung der Erfindung ist vorgesehen, daß der Haltekragen des Sperrteils an seinem der Einschuböffnung des Muffenteils zugekehrten Ende angeordnet ist und daß die Haltenase an der Führungshülse so angeordnet ist, daß ein Halten des Sperrteils durch die Haltenase nur bei Anlage des Haltekragens am Muffenteil möglich ist. Hierdurch ist gewährleistet, daß ein Lösen der Steckverbindung nur nach einem definierten Verschieben des Leitungsendes in Einsteckrichtung möglich ist.

In bevorzugter Ausgestaltung ist ferner vorgesehen, daß das Sperrteil mit einem den Haltekragen axial überragenden Ansatz versehen ist, der in die Einschuböffnung des Muffenteiles eingreift. Dieser Ansatz ist zweckmäßigerweise so lang ausgebildet, daß er mit einem Teil seiner Länge auch dann noch in der Einschuböffnung des Muffenteils gehalten ist, wenn das Sperrteil nach axialem Verschieben am Begrenzungsbund der Führungshülse anliegt. Hierdurch ist zum einen gesichert, daß beim Lösen der Steckverbindung der bzw. die üblicherweise als Dichtungselement eingesetzten O-Ringe nicht aus der Einschuböffnung herausgezogen werden können. Dies hat weiter den Vorteil, daß die gesamte Anordnung kürzer gestaltet werden kann, da für das Lösen der Steckverbindung ein möglicher Rollweg für den O-Ring nicht berücksichtigt zu werden braucht, da dieser durch den Ansatz des Sperrteils in der Einschuböffnung des Muffenteils gehalten wird. Ein weiterer Vorteil besteht darin, daß das Sperrteil zusammen mit dem Muffenteil durchgehend verbunden ist und somit in bezug auf die Dichtungselemente wie eine Scherlastsicherung wirkt, d.h. radial auf die Anordnung einwirkende Kräfte führen nicht zu einer einseitigen Belastungen des Dichtungselementes.

In weiterer Ausgestaltung der Erfindung ist vorgesehen, daß die Führungshülse auf eine zylindrische Haltefläche des Muffenteils aufgeschoben und fest mit diesem verbunden ist. Diese Anordnung hat Vorteile bei der Herstellung der erfindungsgemäßen Kupplungsmuffe, die zweckmäßigerweise aus Kunststoff hergestellt ist, da sich hierdurch eine erhebliche Vereinfachung der Herstellungsformen für die einzelnen Teile ergibt, da diese im wesentlichen zylindrische bzw. rohrförmige Gestalt haben und praktisch keine Hinterschneidungen aufweisen. Die Führungshülse kann auf der zylindrischen Haltefläche des Muffenteils durch Verkleben oder Verschweißen befestigt sein. Besonders zweckmäßig ist es jedoch, die Führungshülse mittels einer Rastverbindung mit dem Muffenteil zu verbinden. Hierdurch ergibt sich für die Montage des Muffenteils bei der Herstellung eine erhebliche Vereinfachung, da die einzelnen Teile nur zusammengesteckt zu werden brauchen.

Die Erfindung wird anhand schematischer Zeichnungen näher erläutert. Es zeigen

Fig. 1 einen Längsschnitt durch ein Muffenteil,
Fig. 2 eine andere Ausführungsform für ein Sperrteil.

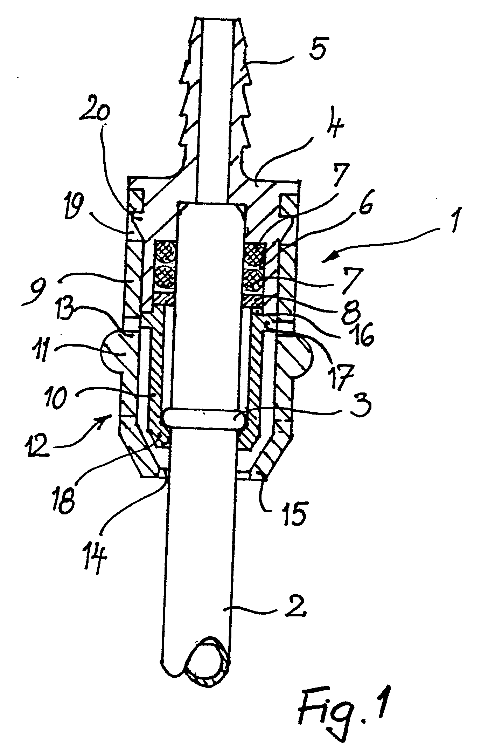

Die in Fig. 1 dargestellte Steckverbindung zur Verbindung zweier Rohrleitungen besteht aus einer Kupplungsmuffe 1, in die das Ende einer Rohrleitung 2 einschiebbar ist. Die Rohrleitung 2 ist mit einem Haltebund 3 versehen, der beispielsweise durch Anstauchen angeformt wird.

Die Kupplungsmuffe besteht im wesentlichen aus einem Muffenteil 4 aus Metall oder Kunststoff, das an einem Ende mit einem Ansatz 5 versehen ist, auf den bei der dargestellten Ausführungsform in üblicher Weise ein Schlauch aufgeschoben wird. Bei anderen Ausführungsformen kann der Ansatz 5 auch mit einem Gewinde versehen sein oder mit einem sogenannten Einschlagansatz, so daß das Muffenteil 4 fest an einem entsprechenden Maschinenteil, beispielsweise an einem Motorblock befestigt werden kann.

Das Muffenteil 4 ist auf seiner dem Ansatz 5 abgekehrten Seite mit einer abgestuften Einschuböffnung 6 versehen, in der zwei O-Ringe 7 als Dichtungselement angeordnet sind. Die O-Ringe sind zur Öffnungsseite hin durch einen lose eingelegten Deckring 8 abgedeckt.

Das Muffenteil 4 ist ferner mit einer koaxial ausgerichteten Führungshülse 9 versehen, in der ein hülsenförmiges Sperrteil 10 axial verschiebbar geführt ist. Die Wandung der Führungshülse 9 ist auf zwei gegenüberliegenden Seiten durch entsprechende Einschnitte bzw. Schlitze mit zwei nach innen eindrückbaren federnden Zungen 11 versehen, die in dem mit dem Pfeil 12 gekennzeichneten Bereich in das Material der Führungshülse übergehen und mit ihrem freien Ende 13 gegen die Einschuböffnung 6 ausgerichtet sind.

Endseitig ist die Führungshülse 9 mit einer Durchtrittsöffnung 14 versehen, die durch einen radial nach innen vorspringenden Begrenzungsbund 15 begrenzt ist. Der Durchmesser der Durchtrittsöffnung ist so bemessen, daß der Haltebund 3 der Rohrleitung 2 frei hindurchgeschoben werden kann.

Das Sperrteil 10 ist an seinem der Einschuböffnung 6 des Muffenteils 4 zugekehrten Ende mit einem umlaufenden Ansatz 16 versehen, der bis in die Einschuböffnung 6 hineinragt und so lang bemessen ist, daß er auch bei einer axialen Verschiebung gegen die Durchtrittsöffnung 4 noch mit einem Teil seiner Länge in der Einschuböffnung 6 gehalten bleibt. In diesem Bereich ist das Sperrteil 13 ferner mit einem Haltekragen 17 versehen, der in bezug auf die Zungen 11 so bemessen ist, daß bei einer Anlage des Haltekragens 17 am Muffenteil 4 die Zungen 11 nach innen eindrückbar sind und mit ihren freien Enden 13 den Haltekragen 17 hintergreifen.

Das andere Ende des Sperrteils 10 ist mit einem nach innen gegen die Wandung der Rohrleitung versehenen Sperrkragen 18 versehen, der bei eingeschobener Rohrleitung 2 den Haltebund 3 hintergreift. Dieses Ende des Sperrteils 10 ist beispielsweise durch einen oder mehrere Längsschlitze in radialer Richtung elastisch verformbar, so daß die Rohrleitung 2 mit ihrem Haltebund bei gleichzeitiger Verformung dieses Bereichs des Sperrteils 10 in die Kupplungsmuffe unter Einrastung des Sperrkragens 18 eingeschoben und entsprechend auch wieder herausgezogen werden kann. Das Sperrteil 10 ist hierbei in seiner Länge so bemessen, daß es beim Einschieben der Rohrleitung 2 unter Anlage am Muffenteil 4 unter freier Verformung des Sperrkragens 18 den Rastvorgang zuläßt. Wird nun die Rohrleitung unbeabsichtigt einer Zugbelastung in Längsrichtung ausgesetzt, so verschiebt sich das Rohrleitungsende zusammen mit dem Sperrteil 10 gegen den Begrenzungsbund 15 der Führungshülse 9. Bildet man nun die Innenfläche des Begrenzungsbundes 15 und die entsprechende Außenfläche des Sperrteils 10 im Bereich des Sperrkragens 18 gleichflächig konisch aus, so wird das Sperrteil 10 unter dem Einfluß der Zugkraft gegen die konische Gegenfläche des Begrenzungsbundes 15 gezogen, so daß zum einen eine Verformung in radialer Richtung unterbunden wird und zum anderen gleichzeitig aufgrund der Keilwirkung eine zusätzliche Klemmkraft in radialer Richtung gegen die Wandung der Rohrleitung 2 aufgebracht, so daß ein Herausziehen des Haltebundes aus der Verklammerung mit dem Sperrkragen 18 nicht möglich ist.

Will man nun die Rohrleitung 2 aus der Kupplungsmuffe lösen, muß diese zunächst in die Kupplungsmuffe so weit eingeschoben werden, bis der Haltekragen 17 am Muffenteil 4 anliegt und die Zungen 11 nach innen eingedrückt werden können. Wird nun wiederum auf die Rohrleitung 2 eine Zugkraft ausgeübt, so wird das Sperrelement 10 von den freien Enden 13 der Zungen 11 in dieser Position festgehalten. Nunmehr ist der erforderliche Freiraum für ein Ausfedern des Sperrkragens 18 nach außen vorhanden und die Rohrleitung kann aus dem Sperrteil 10 ausgerastet werden.

Die Führungshülse 9 kann nun mit dem Muffenteil 4 verklebt sein oder aber, wie bei dem Ausführungsbeispiel dargestellt, durch eine Rastverbindung am Muffenteil 4 festgelegt sein. Hierzu reicht es aus, wenn in der Führungshülse auf wenigstens zwei gegenüberliegenden Seiten ein Rastfenster 19 vorgesehen ist, dem am Muffenteil 4 jeweils eine entsprechende Nase 20 zugeordnet ist. Bei der Montage einer derartigen Kupplungsmuffe können dann in einfacher Weise zunächst die O-Ringe 7 sowie der Endring 8 in die Einschuböffnung 7 eingelegt werden. Anschließend wird das Sperrteil 10 in die Führungshülse eingeschoben und diese dann auf das Muffenteil 4 so weit ausgeschoben, bis die Nase 20 in das Fenster 19 eingerastet ist.

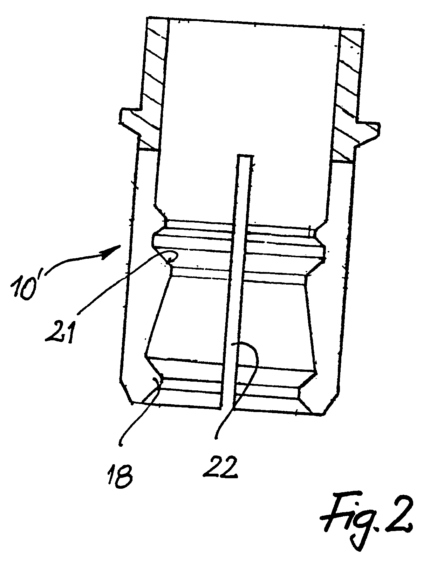

Die in Fig. 2 in größerem Maßstab dargestellte andere Ausführungsform eines Sperrteils unterscheidet sich von der Ausführungsform gem. Fig. 1 nur durch eine zusätzliche Rastnut 21 für den Haltebund 3 des einzuschiebenden Leitungsendes. Die Rastnut 21 liegt noch in dem durch vier Schlitze 22 verformbar gestalteten Ende des Sperrteils 10', so daß eine erhöhte Sicherung gegeben ist.

## Ansprüche

1. Kupplungsmuffe zum Verbinden der Enden zweier Leitungen für strömende Medien, insbesondere für Kraftstoffleitungen an Verbrennungsmotoren, mit einem Muffenteil, das wenigstens eine mit einem elastischen Dichtelement versehene Einschuböffnung zur Aufnahme eines mit einem Haltebund versehenen Leitungsendes aufweist, und mit einem den Haltebund des Leitungsendes hintergreifenden Sperrteil, dadurch **gekennzeichnet**, daß auf der Seite der Einschuböffnung (6) das Muffenteil (4) mit einer koaxial ausgerichteten Führungshülse (9) versehen ist, in der das Sperrteil (10) axial verschiebbar geführt ist, und die mit einer Durchtrittsöffnung (14) versehen ist, die durch einen radial nach innen vorspringenden Begrenzungsbund (15) begrenzt ist, daß die Führungshülse (9) mit wenigstens einer gegen das Sperrteil (10) bewegbaren Haltenase versehen ist und daß das Sperrteil (10) im wesentlichen zylindrisch ausgebildet ist, einen Außendurchmesser aufweist, der geringer ist als der Innendurchmesser der Führungshülse (9) sowie mit einem gegen die Innenfläche der Führungshülse (9) gerichteten Haltekragen (17) versehen ist und an seinem der Durchtrittsöffnung (14) zugekehrten Ende in radialer Richtung verformbar ausgebildet und mit einem umlaufenden, nach innen gerichteten, den Haltebund (3) des eingeschobenen Leitungsendes hintergreifenden Sperrkragen (18) versehen ist, der mit seinem Außenumfang am Begrenzungsbund der Führungshülse (9) anlegbar ist.

2. Kupplungsmuffe nach Anspruch 1, dadurch gekennzeichnet, daß das verformbare Ende des Sperrteils (10) wenigstens einen axial verlaufenden Schlitz aufweist.

3. Kupplungsmuffe nach Anspruch 1 oder 2, dadurch gekennzeichnet, daß das verformbare Ende des Sperrteils (10) auf seiner Außenseite eine umlaufende Anlagefläche aufweist, die bei einer axialen Verschiebung des Sperrteils (10) gegen die Durchtrittsöffnung (14) der Führungshülse (9) an einer entsprechend geformten Gegenfläche im Bereich des Begrenzungsbundes (15) der Führungshülse (9) zur Anlage kommt.

4. Kupplungsmuffe nach Anspruch 3, dadurch gekennzeichnet, daß die Anlagefläche des Sperrteils (10) und die Gegenfläche an der Führungshülse (9) gleichlaufend konisch ausgebildet sind.

5. Kupplungsmuffe nach Anspruch 3, dadurch gekennzeichnet, daß die Anlagefläche des Sperrteils (10) durch eine im wesentlichen zylindrische Fläche mit geringerem Durchmesser als die angrenzenden Bereiche des Sperrteils (10) gebildet wird, die bei einer axialen Verschiebung des Sperrteils (10) den Begrenzungsbund (15) der Führungshülse (9) untergreift.

6. Kupplungsmuffe nach einem der Ansprüche 1 bis 5, dadurch gekennzeichnet, daß die Haltenase der Führungshülse (9) an einer nach innen eindrückbaren, federnden Zunge (11) angeordnet ist.

7. Kupplungsmuffe nach Anspruch 6, dadurch gekennzeichnet, daß die Haltenase durch das freie, gegen die Einschuböffnung des Muffenteils gerichtete Ende (13) der Zunge (11) gebildet wird.

8. Kupplungsmuffe nach Anspruch 6 oder 7, dadurch gekennzeichnet, daß zwei diametral gegenüberliegende Zungen (11) vorgesehen sind.

9. Kupplungsmuffe nach einem der Ansprüche 1 bis 8, dadurch gekennzeichnet, daß der Haltekragen (17) des Sperrteils (10) an seinem der Einschuböffnung (6) des Muffenteils (4) zugekehrten Ende angeordnet ist und daß die Haltenase an der Führungshülse (9) so angeordnet ist, daß ein Halten des Sperrteils durch die Haltenase nur bei Anlage des Haltekragens (17) am Muffenteil (4) möglich ist.

10. Kupplungsmuffe nach einem der Ansprüche 1 bis 9, dadurch gekennzeichnet, daß das Sperrteil (10) mit einem dem Haltekragen (17) axial überragenden Ansatz (16) versehen ist, der in die Einschuböffnung (6) des Muffenteils (4) eingreift.

11. Kupplungsmuffe nach einem der Ansprüche 1 bis 10, dadurch gekennzeichnet, daß die Führungshülse (9) auf eine zylindrische Haltefläche des Muffenteils (4) aufgeschoben und fest mit diesem verbunden ist.

12. Kupplungsmuffe nach Anspruch 11, dadurch gekennzeichnet, daß die Führungshülse (9) mittels einer Rastverbindung (19, 20) mit dem Muffenteil (4) verbunden ist.

13. Kupplungsmuffe nach einem der Ansprüche 1 bis 12, dadurch gekennzeichnet, daß am Sperrteil (10) im Bereich seines verformbaren Endes mit Abstand zum Sperrkragen (18) eine Rastnut (21) für den Haltebund (3) des einzuschiebenden Leitungsendes angeordnet ist.

## Claims

1. Coupling bushing for connecting the ends of two lines for fluid media, in particular for fuel lines on internal combustion engines, having a bushing part which has at least one insertion opening, provided with an elastic sealing element, for receiving a line end provided with a holding shoulder, and having a blocking member engaging behind the holding shoulder of the line end, characterised in that on the side of the insertion opening (6) the bushing part (4) is provided with a coaxially aligned guide sleeve (9) in which the blocking member (10) is guided so as to be axially displaceable, and which is provided with a passage opening (14) which is delimited by a limiting shoulder (15) projecting radially inwards, that the guide sleeve (9) is provided with at least one holding projection which is movable towards the blocking member (10) and that the blocking member (10) is substantially cylindrical, has an external diameter which is smaller than the internal diameter of the guide sleeve (9) and also is provided with a holding collar (17) directed towards the inner surface of the guide sleeve (9) and at its end facing the passage opening (14) is designed to be deformable in the radial direction and is provided with a peripheral, inwardly directed blocking collar (18) engaging behind the holding shoulder (3) of the inserted line end, which blocking collar can be placed with its external periphery on the limiting shoulder of the guide sleeve (9).

2. Coupling bushing according to Claim 1, characterised in that the deformable end of the blocking member (10) has at least one axially extending slot.

3. Coupling bushing according to Claim 1 or 2, characterised in that the deformable end of the blocking member (10) has on its outside a peripheral locating surface which upon axial displacement of the blocking member (10) towards the passage opening (14) of the guide sleeve (9) comes to rest on a correspondingly shaped counter-surface in the region of the limiting shoulder (15) of the guide sleeve (9).

4. Coupling bushing according to Claim 3, characterised in that the locating surface of the blocking member (10) and the counter-surface on the guide sleeve (9) are conical and run in the same direction.

5. Coupling bushing according to Claim 3, characterised in that the locating surface of the blocking member (10) is formed by a substantially cylindrical surface with a smaller diameter than the adjoining areas of the blocking member (10), which surface engages underneath the limiting shoulder (15) of the guide sleeve (9) upon axial displacement of the blocking member (10).

6. Coupling bushing according to one of Claims 1 to 5, characterised in that the holding projection of the guide sleeve (9) is located on a resilient tongue (11) which can be pressed inwards.

7. Coupling bushing according to Claim 6, characterised in that the holding projection is formed by the free end (13) of the tongue (11), which end is directed towards the insertion opening of the bushing part.

8. Coupling bushing according to Claim 6 or 7, characterised in that two diametrically opposed tongues (11) are provided.

9. Coupling bushing according to one of Claims 1 to 8, characterised in that the holding collar (17) of the blocking member (10) is arranged on its end facing the insertion opening (6) of the bushing part (4) and that the holding projection is arranged on the guide sleeve (9) in such a manner that holding of the blocking member by the holding projection is only possible when the holding collar (17) is bearing on the bushing part (4).

10. Coupling bushing according to one of Claims 1 to 9, characterised in that the blocking member (10) is provided with a nose (16) axially projecting past the holding collar (17), which nose engages in the insertion opening (6) of the bushing part (4).

11. Coupling bushing according to one of Claims 1 to 10, characterised in that the guide sleeve (9) is pushed onto a cylindrical holding surface of the bushing part (4) and is connected securely thereto.

12. Coupling bushing according to Claim 11, characterised in that the guide sleeve (9) is connected to the bushing part (4) by means of a snap-in connection (19, 20).

13. Coupling bushing according to one of Claims 1 to 12, characterised in that a snap-in groove (21) for the holding shoulder (3) of the line end to be inserted is arranged on the blocking member (10) in the region of its deformable end at a distance from the blocking collar (18).

## Revendications

1. Manchon d'accouplement permettant de raccorder les extrémités de deux tuyauteries pour fluides en écoulement, notamment de tubulures de carburant utilisées sur les moteurs à combustion, comprenant une pièce-manchon, qui comporte au moins une ouverture d'emboîtement pourvue d'un élément élastique d'étanchéité et destinée à recevoir une extrémité de tuyauterie pourvue d'un bourrelet de retenue, et une pièce de blocage s'accrochant derrière ce bourrelet de retenue de l'extrémité de tuyauterie, caractérisé en ce que, du côté de son ouverture d'emboîtement (6), la pièce-manchon (4) est pourvue d'une douille de guidage (9), à disposition coaxiale, dans laquelle la pièce de blocage (10) est guidée de manière à pouvoir y coulisser axialement et qui présente une ouverture de passage (14) qui est délimitée par un collet périphérique (15) en saillie radiale vers l'intérieur, en ce que la douille de guidage (9) comporte au moins un bec de retenue agencé de façon à pouvoir se déplacer vers la pièce de blocage (10) et en ce que cette pièce de blocage (10) est de forme essentiellement cylindrique, possède un diamètre extérieur plus petit que le diamètre intérieur de la douille de guidage (9), est pourvue d'une collerette de retenue (17) orientée vers la surface intérieure de cette douille de guidage (9), est déformable suivant la direction radiale à son extrémité tournée vers l'ouverture de passage (14) et comporte un collet périphérique de blocage (18), dirigé vers l'intérieur, qui s'accroche derrière le bourrelet de retenue (3) de l'extrémité de tuyauterie emboîtée et qui est agencé de façon à pouvoir s'appliquer par son contour périphérique extérieur sur le collet périphérique de la douille de guidage (9).

2. Manchon d'accouplement suivant la revendication 1, caractérisé en ce que l'extrémité déformable de la pièce de blocage (10) comporte au moins une fente s'étendant axialement.

3. Manchon d'accouplement suivant la revendication 1 ou 2, caractérisé en ce que, sur sa face extérieure, l'extrémité déformable de la pièce de blocage (10) présente une surface périphérique d'appui qui, lors d'une translation axiale de cette pièce de blocage (10) vers l'ouverture de passage (14) de la douille de guidage (9), vient en appui sur une surface complémentaire, de forme correspondante, ménagée dans la zone du collet périphérique (15) de cette douille de guidage (9).

4. Manchon d'accouplement suivant la revendication 3, caractérisé en ce que la surface d'appui de la pièce de blocage (10) et la surface complémentaire ménagée sur la douille de guidage (9) ont des formes coniques de même conicité.

5. Manchon d'accouplement suivant la revendication 3, caractérisé en ce que la surface d'appui de la pièce de blocage (10) est constituée par une surface essentiellement cylindrique dont le diamètre est plus faible que celui des zones contigües de cette pièce de blocage (10) et qui, lors d'une translation axiale de cette même pièce de blocage (10), s'accroche derrière le collet périphérique (15) de la douille de guidage (9).

6. Manchon d'accouplement suivant l'une des revendications 1 à 5, caractérisé en ce que le bec de retenue de la douille de guidage (9) est réalisé sur une languette élastique (11) agencée de façon à pouvoir être enfoncée vers l'intérieur.

7. Manchon d'accouplement suivant la revendication 6, caractérisé en ce que le bec de retenue est constitué par l'extrémité libre (13), de la languette (11), tournée vers l'ouverture d'emboîtement de la pièce-manchon.

8. Manchon d'accouplement suivant la revendication 6 ou 7, caractérisé en ce qu'il est prévu deux languettes (11) diamétralement opposées.

9. Manchon d'accouplement suivant l'une des revendications 1 à 8, caractérisé en ce que la collerette de retenue (17) de la pièce de blocage (10) est disposée sur son extrémité tournée vers l'ouverture d'emboîtement (6) de la pièce-manchon (4) et en ce que le bec de retenue est disposé sur la douille de guidage (9) de façon à ne permettre une retenue de la pièce de blocage par le bec de retenue que lorsque la collerette de retenue (17) est en appui sur la pièce-manchon (4).

10. Manchon d'accouplement suivant l'une des revendications 1 à 9, caractérisé en ce que la pièce de blocage (10) comporte un embout (16), en saillie axiale par rapport à la collerette de retenue (17), qui s'emboîte dans l'ouverture d'emboîtement (6) de la pièce-manchon (4).

11. Manchon d'accouplement suivant l'une des revendications 1 à 10, caractérisé en ce que la douille de guidage (9) est emboîtée sur une surface cylindrique, de retenue, de la pièce-manchon (4) et est liée à cette pièce-manchon.

12. Manchon d'accouplement suivant la revendication 11, caractérisé en ce que la douille de guidage (9) est fixée sur la pièce-manchon (4) par une liaison à enclenchement (19, 20).

13. Manchon d'accouplement suivant l'une des revendications 1 à 12, caractérisé en ce qu'il est prévu sur la pièce de blocage (10), dans la zone de son extrémité déformable et à une certaine distance du collet de blocage (18), une gorge d'enclenchement (21) destinée au bourrelet de retenue (3) de l'extrémité de tuyauterie à emboîter.

Fig.1

10'

21

18    22

*Fig. 2*